# EUROPÄISCHE PATENTANMELDUNG

(11) **EP 4 663 273 A1**
(43) Veröffentlichungstag der Anmeldung: **17.12.2025**
(21) Anmeldenummer: 25178993.9
(22) Anmeldetag: 27.05.2025
(51) Int. Cl.: B01D 53/04, F28F 1/20, F28F 1/22

(54) **TEMPERIERANORDNUNG ZUR TEMPERIERUNG EINER SORBENTSCHÜTTUNG, FÜR EINE DIRECT AIR CAPTURE VORRICHTUNG, SORBENTBEHÄLTERANORDNUNG MIT DER TEMPERIERANORDNUNG UND DIRECT AIR CAPTURE VORRICHTUNG**

(30) Priorität: 29.05.2024 DE 102024115024
(71) Anmelder: VOLKSWAGEN AG, 38440 Wolfsburg (DE)
(72) Erfinder: Beger, Frank, 30163 Hannover, DE (DE); Wiegel, Marcel, 39649 Gardelegen, DE (DE); Heimermann, Christian, 38442 Wolfsburg (DE); Hofer, Martin, 38118 Braunschweig, DE (DE)
(74) Vertreter: MFG Patentanwälte Meyer-Wildhagen Meggle-Freund Gerhard PartG mbB

(57) **Zusammenfassung**

Die vorliegende Erfindung betrifft eine Temperieranordnung (1), zur Temperierung einer Sorbentschüttung (110), zur Gewinnung von Kohlendioxid aus einem gasförmigen Medium umfassend:
- eine Rohranordnung (20) mit einem Rohr (21), und
- eine Lamellenanordnung (30) in der Sorbentschüttung (110) mit einer länglichen Lamelle (31), wobei das Rohr (21) entlang einer Längsrichtung (L) der Lamelle (31) verläuft und die Lamelle (31) entlang der Längsrichtung (L) kontaktiert.

Die Erfindung betrifft weiterhin eine Sorbentbehälteranordnung (100) mit der erfindungsgemäßen Temperieranordnung (1) und eine Vorrichtung (200) zur Gewinnung von Kohlendioxid aus dem gasförmigen Medium mit der erfindungsgemäßen Temperieranordnung (1).

## Beschreibung

Die Erfindung betrifft eine Temperieranordnung zur Temperierung einer Sorbentschüttung, zur Gewinnung von Kohlendioxid aus einem gasförmigen Medium sowie eine Sorbentbehälteranordnung mit der Temperieranordnung, eine Vorrichtung zur Gewinnung von Kohlendioxid aus dem gasförmigen Medium und die Verwendung der Temperieranordnung zur Temperierung der Sorbentschüttung.

Die Emission von Kohlendioxid in die Atmosphäre gilt aktuell als wesentlicher Treiber des Klimawandels. Kohlenstoffabscheidungs- und Speichertechniken (Carbon capture and storage - CCS) sind effiziente und effektive Methoden zur Reduzierung der Kohlendioxidemissionen in die Atmosphäre.

Das Ziel aktueller Ansätze ist es, mit einem entsprechenden Verfahren Kohlendioxid aus der Umgebungsluft zu gewinnen. Daher werden solche Anlagen auch als "künstliche Bäume" oder "artifical trees" bezeichnet. Bekannte Verfahren zum Einfangen von Kohlendioxid sind Absorption, Adsorption, Membran-basierte Systeme, elektrochemische Separation und kryogene Trennung.

Ein aktuell verfolgter Ansatz basiert auf der Verwendung eines Feststoffsorbents als Schüttung. Das Material wird aus der Gruppe bestehend aus Silicagel, Alumosilikat und MOF (Metal Organic Framework) und insbesondere Zeolith ausgewählt. Das Feststoffsorbent ist eine Verbindung, die durch physikalische Kräfte einen Stoff (z. B. ein Gas wie Kohlendioxid) an sich binden kann. Unter kontrollierten Bedingungen desorbiert das Feststoffsorbent den adsorbierten Stoff wieder. Die Desorption kann durch das Einwirken von Wärme, Druck, Anlagern von anderen Stoffen unter Abgabe des zuerst adsorbierten Stoffs geschehen.

Zum Temperieren des Feststoffsorbents werden Wärmetauscher verwendet. Hierzu befindet sich der Wärmetauscher innerhalb eines Behälters, der mit Feststoffsorbent als Schüttung befüllt ist. Die bislang verwendeten Wärmetauscher in DAC Anlagen weisen einen hohen Materialaufwand für den Wärmetauscher, lange Leitungsstrecken und einen hohen Druckverlust in den Leitungslängen auf. Weiterhin können bekannte Wärmetauscher aufgrund ihres strukturellen Aufbaus nur eine geringe Sorbentmenge aufnehmen.

Eine Herausforderung bei der Verwendung von Zeolith als Feststoffsorbent ist, dass es eine kreideartige Textur aufweist. Wird Zeolith mechanisch bewegt, führt die gegenseitige Reibung der Zeolithkörner zu Verschleiß. Der Abrieb führt zum Sorbentverlust. Dadurch kann die Leistungsfähigkeit zur Adsorption und Desorption von Kohlendioxid sinken.

Wärmetauscher sind aufgrund der guten Wärmeleitfähigkeit oftmals in Aluminium ausgeführt. Aluminium zeichnet sich jedoch auch durch einen hohen Wärmeausdehnungskoeffizienten aus. Durch das regelmäßige Erwärmen und Abkühlen des Wärmetauschers ändern sich die geometrischen Abmessungen des Wärmetauschers. Durch die Wärmeausdehnung des Wärmetauschers wird das Zeolith mechanisch bewegt, wodurch sich der Verschleiß erhöht. Dieses Verhalten wird durch die konstruktive Anordnung der einzelnen Komponenten bei bekannten Wärmetauschern noch begünstigt.

In der WO 2018/083109A1 wird ein Wärmetauscher für eine Gastrenneinheit zur Abtrennung eines ersten Gases aus einem Gemisch unter Verwendung eines zyklischen Adsorptions-/Desorptionsverfahrens beschrieben. Der Wärmetauscher umfasst mehrere Rohre und Metallbleche. Die Rohre verlaufen mäanderförmig. Die Metallbleche sind parallel beabstandet zueinander angeordnet und haben eine Vielzahl von Löchern, durch die die Rohre geführt werden. Die Rohre verlaufen senkrecht zu den länglichen Metallblechen durch die Löcher hindurch.

In der WO 2024/006521A2 wird ein Wärmetauscher für eine DAC Anlage beschrieben. Der Wärmetauscher umfasst eine Kombination aus Rohren und Platten. Der Wärmetauscher ist in einem Behälter angeordnet. Der Behälter kann mit frei fließendem Schüttgut als Sorbent befüllt werden. Die Rohre und die Platten sind jeweils parallel zueinander angeordnet.

Aufgabe der vorliegenden Erfindung ist es, eine verbesserte Temperieranordnung zur Temperierung einer Sorbentschüttung, eine verbessere Sorbentbehälteranordnung sowie eine verbesserte Vorrichtung bereitzustellen, bei der die oben genannten Probleme wenigstens teilweise überwunden werden.

Diese Aufgabe wird durch die erfindungsgemäße Temperieranordnung nach Anspruch 1, die erfindungsgemäße Sorbentbehälteranordnung nach Anspruch 13, die erfindungsgemäße Vorrichtung nach Anspruch 14 und die erfindungsgemäße Verwendung nach Anspruch 15 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Ein erster Aspekt der Erfindung betrifft eine Temperieranordnung, zur Temperierung einer Sorbentschüttung, zur Gewinnung von Kohlendioxid aus einem gasförmigen Medium umfassend:
- eine Rohranordnung mit einem Rohr, und
- eine Lamellenanordnung in der Sorbentschüttung mit einer länglichen Lamelle, wobei das Rohr entlang einer Längsrichtung der Lamelle verläuft und die Lamelle entlang der Längsrichtung kontaktiert.

Die Temperieranordnung kann ein Wärmetauscher sein. Die Temperieranordnung ist derart ausgebildet, die Sorbentschüttung zu erwärmen und abzukühlen. Eine Wärmeübertragung von der Temperieranordnung auf die Sorbentschüttung kann durch Konvektion und/oder durch Konduktion erfolgen. Zur Temperierung wird ein Temperiermedium verwendet. Die Rohranordnung kann mit dem Temperiermedium durchströmt werden. Das Temperiermedium kann dampfförmig oder flüssig sein. Die Rohranordnung kann mit Dampf oder mit flüssigen Medium durchströmt werden.

Das Temperiermedium kann mit einem Druck zwischen 5 bar und 11 bar eingeleitet werden, insbesondere mit einem Druck zwischen 6 bar und 10 bar, insbesondere mit einem Druck zwischen 7 bar und 10 bar, insbesondere mit 8 bar.

Die Sorbentschüttung kann ein Physisorbent sein. Die Sorbentschüttung kann in körniger Form vorliegen. Die Sorbentschüttung kann ein Granulat sein. Die Sorbentschüttung kann ein kugelförmiges Granulat sein. Die Sorbentschüttung kann Zeolit umfassen. Die Sorbentschüttung kann weiterhin ausgewählt sein aus der Gruppe bestehend aus Silicagel, Alumosilikat und MOF (Metal Organic Framework). Das gasförmige Medium kann Umgebungsluft sein.

Die Lamellenanordnung ist innerhalb der Sorbentschüttung angeordnet. Die Lamellenanordnung ist eintauchend in der Sorbentschüttung angeordnet. Die Lamelle der Lamellenanordnung kann schwertartig in die Sorbentschüttung eintauchen. Die Lamellenanordnung wird teilweise oder vollständig von der Sorbentschüttung umgeben. Die Sorbentschüttung kontaktiert die Lamellenanordnung.

Die längliche Lamelle kann schwertartig ausgeführt sein. Eine erste Lamellenlänge entlang der Längsrichtung der länglichen Lamelle ist länger als eine zweite Lamellenlänge entlang einer Richtung, die vertikal zur Längsrichtung verläuft. Mit anderen Worten, eine erste Länge der Lamelle ist länger als eine zweite Länge der Lamelle.

Das Rohr und die längliche Lamelle sind derart ausgerichtet, dass sie entlang der Längsrichtung parallel zueinander verlaufen. In einem Bereich, in dem das Rohr entlang der Längsrichtung der Lamelle verläuft, kontaktiert das Rohr die Lamelle. In dem Bereich, in dem das Rohr die Lamelle kontaktiert, haben das Rohr und die Lamelle physischen Kontakt. Das Rohr gibt seine Temperatur über einen langen Wandkontakt an die Lamelle ab. Dadurch wird die thermische Ausdehnung der Temperieranordnung im Wesentlichen auf die Längsrichtung konzentriert. Dadurch wird die thermische Ausdehnung der Temperieranordnung im Wesentlichen auf die Längsrichtung beschränkt. Aufgrund einer geringen Dicke der Lamelle hat die minimale Wärmeausdehnung in Dickenrichtung kaum Einfluss auf die mechanische Bewegung der Sorbentschüttung.

Die Lamelle gibt ihre Temperatur im Wesentlichen über die beiden Seitenflächen an die Sorbentschüttung ab. Dadurch wird die Wärmeübertragungsfläche maximiert.

Die Rohranordnung kann aus Aluminium sein. Die Lamellenanordnung kann aus Aluminium sein. Aufgrund der guten Wärmeleitung ist Aluminium ein geeignetes Material für die Temperieranordnung. Auch Materialien mit ähnlichen Wärmeleiteigenschaften wären denkbar.

Durch die erfindungsgemäße Temperieranordnung wird der Durchflusswiderstand einer durchströmenden Luft minimiert. Durch die erfindungsgemäße Temperieranordnung wird ein optimaler Wärmeübergang zwischen der Rohranordnung bzw. dem Rohr und der Lamellenanordnung bzw. der Lamelle erreicht. Durch die erfindungsgemäße Temperieranordnung kann die Sorbentmenge pro Temperieranordnung erhöht werden.

Durch die erfindungsgemäße Temperieranordnung wird eine thermische Ausdehnung dahingehend optimiert, dass keine mechanische Bewegung der Sorbentschüttung während der Temperierung erfolgt. Dadurch kann der Verschleiß der Sorbentschüttung reduziert werden. Durch die erfindungsgemäße Temperieranordnung kann die Sorbentschüttung leicht eingefüllt und entfernt werden.

Ausführungsbeispiele der Erfindung werden nun beispielhaft und unter Bezugnahme auf die beigefügte Zeichnung beschrieben. Dabei zeigt:
Fig. 1 eine schematische Seitenansicht einer erfindungsgemäßen Temperieranordnung;
Fig. 2 eine perspektivische Ansicht der erfindungsgemäßen Temperieranordnung;
Fig. 3 eine Detailansicht einer Lamelle mit einer Prägung;
Fig. 4 eine Detailansicht der Lamelle mit zwei Teillamellen;
Fig. 5 eine erste Ausführungsform einer Railanordnung
Fig. 6 eine Detailansicht der ersten Ausführungsform der Railanordnung mit einer Anschlusselementanordnung;
Fig. 7 eine zweite Ausführungsform der Railanordnung;
Fig. 8 eine dritte Ausführungsform der Railanordnung;
Fig. 9 eine schematische Draufsicht der erfindungsgemäßen Temperieranordnung mit einer Positionierungsanordnung;
Fig. 10 eine schematische Darstellung eines Positionierungselements;
Fig. 11 eine Detailansicht der erfindungsgemäßem Temperieranordnung mit einem Umlenkabschnitt;
Fig. 12 eine zweite Ausführungsform der Lamelle;
Fig. 13 eine perspektivische Detailansicht der erfindungsgemäßen Temperieranordnung mit der zweiten Ausführungsform der Lamelle;
Fig. 14 eine Schnittansicht der erfindungsgemäßen Temperieranordnung mit der zweiten Ausführungsform der Lamelle;
Fig. 15 eine schematische Seitenansicht einer erfindungsgemäßen Sorbentbehälteranordnung; und
Fig. 16 eine schematische Darstellung einer erfindungsgemäßen Vorrichtung.

Vor einer detaillierten Beschreibung von Ausführungsbeispielen folgen anhand der beigefügten Zeichnungen allgemeine Anmerkungen.

Es gibt Ausführungsformen, bei denen eine Strömungsrichtung innerhalb des Rohrs entlang der Längsrichtung der Lamelle verläuft.

Die Lamelle steht senkrecht zur Strömungsrichtung. Die Strömungsrichtung kann im Bereich der Lamelle entlang der Längsrichtung der Lamelle verlaufen.

Das Rohr kann derart geformt sein, dass die Strömungsrichtung entlang der Längsrichtung der Lamelle geradlinig verläuft. Das Rohr kann derart geformt sein, dass die Strömungsrichtung entlang der Längsrichtung gegenläufig verläuft. Das Rohr kann beispielsweise U-förmig geformt sein. Das Rohr kann beispielsweise mäanderförmig geformt sein.

Die Lamelle ist derart mit dem Rohr ausgerichtet, dass bei thermischer Ausdehnung keine mechanische Bewegung der Sorbentschüttung während der Temperierung erfolgt. Das wird unter anderem dadurch erreicht, dass die Ausdehnung in Dickenrichtung minimal ist. Weiterhin kann sich das Rohr in Längsrichtung relativ bzw. unabhängig zur Lamelle ausdehnen. Dadurch kann der Verschleiß der Sorbentschüttung reduziert werden.

Es gibt Ausführungsformen, bei denen an der Lamelle eine Prägung entlang der Längsrichtung der Lamelle ausgebildet ist.

Die Prägung kann eine Ausformung sein. Die Prägung entlang der Längsrichtung an der Lamelle ist ein Prägungsbereich. Eine Wandstärke der Lamelle innerhalb und außerhalb des Prägungsbereichs kann im Wesentlichen identisch sein. Die Prägung kann halbkreisförmig ausgebildet sein.

Die Lamelle mit Prägung kann über ein Blechumformungsverfahren hergestellt werden. Die Lamelle mit Prägung kann über ein Profilierverfahren hergestellt werden. Die Lamelle mit Prägung kann über ein Strangpressverfahren hergestellt werden.

Durch die Prägung kann ein Wärmeübergang optimal gestaltet werden. Durch die Prägung wird eine Übertragungsfläche vergrößert. Durch die konstante Wandstärke kann eine gleichmäßige Temperierung der Sorbentschüttung erfolgen.

Es gibt Ausführungsformen, bei denen das Rohr von der Prägung umgebend in der Prägung angeordnet ist.

Das Rohr kann teilweise von der Prägung umgebend in der Prägung angeordnet sein. Das Rohr kann vollständig von der Prägung umgebend in der Prägung angeordnet sein. Die Prägung kann das Rohr umhüllen. Die Prägung kann das Rohr teilweise oder vollständig umhüllen. Die halbkreisförmige Prägung kann eine Form haben, die einer Form des Rohrs folgt. Die halbkreisförmige Prägung kann an einen Durchmesser des Rohrs angepasst werden.

Das Rohr verläuft innerhalb der Prägung und kontaktiert die Lamelle entlang der Längsrichtung innerhalb der Prägung.

Das Rohr kann über Klipsen oder Bördeln an der Lamelle befestigt sein. Dadurch verläuft das Rohr wärmespannungsfrei innerhalb der Prägung der Lamelle. Das Rohr kann sich gegenüber der Lamelle thermisch unabhängig ausdehnen. Dadurch werden werkstoffliche Thermo-Schubspannungen vermieden.

Alternativ kann das Rohr über Löten oder Schweißen an der Lamelle befestigt sein.

Das Rohr und die Prägung können derart aufeinander abgestimmt und ausgelegt sein, dass ein Wärmeübertrag von dem Rohr auf die Lamelle optimiert wird. Weiterhin kann die Auslegung dahingehend erfolgen, dass ein Wärmeübertrag von der Lamelle auf die Sorbentschüttung optimiert wird. Dadurch wird die Effizienz der Temperieranordnung verbessert.

Es gibt Ausführungsformen, bei denen die Lamelle zwei Teillamellen mit jeweils einer Teilprägung umfasst, wobei die beiden Teilprägungen eine Kanalstruktur innerhalb der Lamelle ausbilden.

Die zwei Teillamellen sind achsensymmetrisch bzw. spiegelsymmetrisch ausgeführt. Die zwei Teillamellen sind in einer Einbauposition achsensymmetrisch zueinander angeordnet. Die zwei Teillamellen kontaktieren sich außerhalb des Prägungsbereichs. Die zwei Teillamellen kontaktieren sich außerhalb des Prägungsbereichs vollflächig. Dadurch wird ein bestmöglicher Wärmeübergang gewährleistet.

Die Kanalstruktur kann einen im Wesentlichen runden Querschnitt haben. Alternativ kann die Kanalstruktur auch einen anderen Querschnitt haben. Die beiden Teilprägungen formen die Kanalstruktur. Die Kanalstruktur kann die Lamelle vollständig durchsetzen. Die Kanalstruktur kann entlang der Längsrichtung geradlinig verlaufen. Die Kanalstruktur kann mehrere Einzelkanäle umfassen.

In einem Ausführungsbeispiel kann die Kanalstruktur einen oder mehrere Umlenkabschnitte umfassen. In dem Fall, in dem die Kanalstruktur mehrere Umlenkabschnitte umfasst, kann die Kanalstruktur mäanderförmig verlaufen.

Es gibt Ausführungsformen, bei denen das Rohr in der Kanalstruktur angeordnet ist.

Das Rohr kann im Bereich der Lamelle vollständig von der Kanalstruktur umgeben sein. Das Rohr kann von der Kanalstruktur umhüllt sein. Das Rohr verläuft innerhalb der Kanalstruktur und kontaktiert die Lamelle entlang der Längsrichtung innerhalb der Kanalstruktur. Das Rohr verläuft wärmespannungsfrei innerhalb der Kanalstruktur der Lamelle.

Das Rohr kann vollständig entlang der gesamten Länge der Kanalstruktur verlaufen.

In einem alternativen Ausführungsbeispiel kann das Rohr teilweise entlang der Kanalstruktur verlaufen. Beispielsweise kann das Rohr lediglich in einem Endbereich der Kanalstruktur verlaufen. Das Rohr kann lediglich in einem Endbereich der Kanalstruktur angeordnet sein. In diesem Fall ist die Kanalstruktur mediendicht ausgebildet. Die mediendichte Kanalstruktur ist derart ausgebildet, dass das Temperiermedium durch die Kanalstruktur fließen kann. In diesem Fall können die zwei Teillamellen durch Löten miteinander verbunden sein. Dadurch kann die Kanalstruktur mediendicht und druckdicht ausgeführt werden.

Es gibt Ausführungsformen, bei denen die beiden Teillamellen formschlüssig miteinander verbunden sind.

Die formschlüssige Verbindung kann beispielsweise eine Clinchverbindung oder eine Nietverbindung sein. Die Clinchverbindung hat sich als vorteilhaft erwiesen. Die Teillamellen können um das Rohr durch die Clinchverbindung miteinander verbunden sein. Dadurch werden Wärmespannungen zwischen dem Rohr und der Lamelle vermieden.

Alternativ können die Teillamellen stoffschlüssig miteinander verbunden werden. Die stoffschlüssige Verbindung kann beispielsweise eine Lötverbindung oder eine Schweißverbindung sein.

Es gibt Ausführungsformen, bei denen das Rohr einen ersten Anschlussabschnitt und einen zweiten Anschlussabschnitt umfasst, die beide an einer ersten Stirnseite der Lamelle angeordnet sind.

Der erste Anschlussabschnitt und der zweite Anschlussabschnitt können auf der gleichen Seite angeordnet sein. Das Rohr mit dem ersten und der zweiten Anschlussabschnitt ist einstückig ausgeführt. Der erste Anschlussabschnitt und der zweite Anschlussabschnitt können bezogen auf die Lamelle übereinander angeordnet sein.

Der erste Anschlussabschnitt kann ein Eingangsabschnitt sein. Der erste Anschlussabschnitt kann ein Temperiermedium-Zulauf sein. Über den ersten Anschlussabschnitt kann Heißdampf eingeleitet werden. Der zweite Anschlussabschnitt kann ein Ausgangsabschnitt sein. Der zweite Anschlussabschnitt kann ein Temperiermedium-Ablauf sein. Über den zweiten Anschlussabschnitt kann Kondensat herausgeleitet werden.

Der erste Anschlussabschnitt an der ersten Stirnseite der Lamelle kann über die erste Stirnseite herausragen. Der erste Anschlussabschnitt kann das Rohr beispielsweise um 90°, bezogen auf die Längsrichtung der Lamelle, nach oben umlenken.

Der zweite Anschlussabschnitt an der ersten Stirnseite der Lamelle kann über die erste Stirnseite herausragen. Der zweite Anschlussabschnitt kann das Rohr beispielsweise um 90°, bezogen auf die Längsrichtung der Lamelle nach unten umlenken.

Dadurch kann eine kompakte Anbindung in einer übergeordneten Baugruppe erreicht werden.

Es gibt Ausführungsformen, bei denen das Rohr einen Umlenkabschnitt umfasst, der an einer zweiten Stirnseite der Lamelle angeordnet ist.

Das Rohr mit Umlenkabschnitt ist einstückig ausgeführt.

Der Umlenkabschnitt an der zweiten Stirnseite der Lamelle kann an der zweiten Stirnseite über die Kanalstruktur herausragen. Für den Umlenkabschnitt kann in der Lamelle eine Ausnehmung vorgesehen. Der Umlenkabschnitt kann in der Ausnehmung angeordnet sein. Dadurch kann der Umlenkabschnitt bündig mit einer Stirnseite der Lamelle abschließen. Dadurch wird gewährleistet, dass sich das Rohr gegenüber der Lamelle thermisch unabhängig ausdehnen kann.

Im Umlenkabschnitt ist das Rohr gebogen. Der Umlenkabschnitt kann das Rohr derart umlenken, dass die Strömungsrichtung innerhalb des Rohrs um 180° umgelenkt wird. Der Umlenkabschnitt kann U-förmig ausgebildet sein. Durch den Umlenkabschnitt kann eine bidirektionale Strömungsrichtung innerhalb des Rohrs entlang der Längsrichtung der länglichen Lamelle realisiert werden. Die Strömungsrichtung kann innerhalb der Lamelle im Gegenstrom verlaufen.

Die Temperieranordnung kann beispielsweise mit Dampf als Temperiermedium von oben nach unten durchströmt werden. Dabei erfolgt ein Kondensatablauf nach unten.

Die Temperieranordnung kann beispielsweise mit flüssigem Medium als Temperiermedium von unten nach oben durchströmt werden. Dabei erfolgt eine Entlüftung nach oben.

Es gibt Ausführungsformen, bei denen die Temperieranordnung weiterhin eine Railanordnung umfasst. Die Railanordnung umfasst zwei Rails, wobei das erste Rail mit dem ersten Anschlussabschnitt verbunden ist und das zweite Rail mit dem zweiten Anschlussabschnitt verbunden ist.

Die Railanordnung kann eine Anschlussanordnung sein. Das erste Rail kann länglich ausgebildet sein. Das zweite Rail kann länglich ausgebildet sein. Das Rail ist hohl ausgeführt. Das Rail kann einen eckigen Querschnitt haben. Das Rail kann einen runden Querschnitt haben. Das Rohr ist über den Anschlussabschnitt in das Rail eingebunden.

Das Rohr kann mediendicht mit der Railanordnung verbunden sein. Das erste Rail und das zweite Rail können jeweils eine oder mehrere Ausnehmungen umfassen. Die Ausnehmungen können Bohrungen sein. Das Rohr kann über die Ausnehmungen mit dem ersten Rail und mit dem zweiten Rail verbunden sein. Das Rohr kann über eine stoffschlüssige Verbindung mit dem ersten Rail und mit dem zweiten Rail verbunden sein. Das Rohr kann über eine Schweißverbindung mit dem ersten Rail und mit dem zweiten Rail verbunden sein. Das Rohr kann über eine Lötverbindung mit dem ersten Rail und dem zweiten Rail verbunden sein. Das Rohr kann über eine Laserschweißverbindung mit dem ersten Rail und mit dem zweiten Rail verbunden sein. Das Laserschweißen kann ein Remote-Laserschweißen sein.

Das Rail kann als U-Profil mit Deckel ausgeführt sein. Der Deckel ist mediendicht und druckdicht auf dem U-Profil montierbar. Dadurch kann eine Montage mit dem Rohr und eine Zugänglichkeit verbessert werden. Der Deckel kann nach der Montage mit dem U-Profil stoffschlüssig verbunden werden. Der Deckel kann mit dem U-Profil verschweißt werden. Der Deckel kann über eine Laserschweißverbindung mit dem U-Profil verbunden werden. Das Laserschweißen kann ein taktiles Laserschweißen sein. Alternativ kann der Deckel kann mit dem U-Profil verlötet werden. Alternativ kann der Deckel über eine kraftschlüssige Verbindung mit dem U-Profil lösbar verbunden werden. Die kraftschlüssige Verbindung kann eine Schraubverbindung sein.

Das erste Rail kann ein oberes Rail sein. Das zweite Rail kann ein unteres Rail sein. In einer Einbauposition kann das erste Rail oberhalb des zweiten Rails angeordnet sein.

Das Rohr kann im ersten Anschlussabschnitt bündig mit einem Railboden des ersten Rails verbunden sein. Dadurch kann anfallendes Kondensat durch das Rohr abgeführt werden. Dadurch kann die Bildung von Kondensatpfützen vermieden werden.

Das zweite Rail kann derart ausgeführt sein, dass das Kondensat mittig abgeführt werden kann.

Die Railanodnung kann in Aluminium ausgeführt sein.

Die Railanordnung kann mit einer Anschlusselementanordnung verbunden sein. Über die Anschlusselementanordnung kann das Temperiermedium zugeführt und abgeführt werden. Die Anschlusselementanordnung kann mehrere Anschlusselemente umfassen. Ein erstes Anschlusselement kann mit dem ersten Rail verbunden sein. Ein zweites Anschlusselement kann mit dem zweiten Rail verbunden sein. Die Anschlusselemente können jeweils mittig an dem Rail positioniert sein.

Das Anschlusselement kann ein Anschlussstutzen sein. Das Anschlusselement kann zur Anbindung eines Dampf- und/oder Kondensat-Schlauchs sein. Das Anschlusselement kann zwischen der Railanordnung und dem Schlauch angeordnet sein. Das Anschlusselement kann stoffschlüssig mit der Railanordnung verbunden sein. Das Anschlusselement kann in die Railanordnung gelötet sein. Das Anschlusselement ist vorzugsweise aus einem Edelstahl ausgeführt. Der Edelstahl kann ein 1.4404 Edelstahl sein. Dadurch ist eine korrosionsfreie Verbindung zwischen der Railanordnung und dem Anschlusselement realisierbar. Alternativ kann das Anschlusselement über eine medien- und druckdichte Schraubverbindung mit der Railanordnung verbunden werden.

Die Railanordnung kann derart angeordnet sein, dass sie keinen unmittelbaren Kontakt zur Lamellenanordnung hat. Dadurch wird die thermische Ausdehnung der Railanordnung und der Lamellenanordnung zueinander entkoppelt. Dadurch wird eine mechanische Bewegung der Sorbentschüttung während der Temperierung vermieden.

Es gibt Ausführungsformen, bei denen die Rohranordnung mehrere Rohre umfasst und die Lamellenanordnung mehrere Lamellen umfasst, die jeweils parallel beabstandet zueinander angeordnet sind.

Die mehreren Rohre der Rohranordnung und die mehreren Lamellen der Lamellenanordnung sind jeweils nebeneinanderliegend angeordnet. Jeweils ein Rohr der mehreren Rohre verläuft in der zuvor beschriebenen Art und Weise zu jeweils einer Lamelle der mehreren Lamellen.

Die mehreren Lamellen sind ähnlich wie bei einem Gliederheizkörper zueinander angeordnet. Die mehreren Lamellen berühren sich gegenseitig nicht. Die mehreren Lamellen können jeweils den gleichen Abstand zueinander haben. Der Abstand zwischen den Lamellen kann zwischen 15 mm und 30 mm betragen, vorteilhafterweise zwischen 20 mm und 25 mm. Auch ein anderer Abstand wäre denkbar. Die Auswahl des Abstands hängt mit der Auswahl der Sorbentschüttung zusammen. Die Sorbentschüttung ist zwischen den Lamellen angeordnet. Dadurch wird eine optimale Temperierung der Sorbentschüttung gewährleistet. Dadurch wird ein gleichmäßiges Durchwärmen der Sorbentschüttung gewährleistet.

Die mehreren Rohre berühren sich gegenseitig nicht. Die mehreren Lamellen sind über das erste Rail und das zweite Rail und die mehreren Rohre miteinander gekoppelt. Die Strömungsrichtung ist innerhalb der mehreren Rohre jeweils gleich.

Eine Länge des ersten Rails und eine Länge des zweiten Rails können sich jeweils wenigstens über eine Länge der mehreren parallel beabstandeten Rohre erstrecken. Das erste Rail und das zweite Rail können jeweils mittig zu der Rohranordnung und der Lamellenanordnung ausgerichtet sein.

Die Railanordnung positioniert die mehreren Lamellen fixierend zueinander. Die Railanordnung positioniert die mehreren Lamellen an der ersten Stirnseite fixierend zueinander.

Dadurch kann die Sorbentschüttung leicht eingefüllt und entleert werden. Dadurch kann die Sorbentmenge erhöht werden, die von der Temperieranordnung temperierbar ist.

Das zweite Rail als unteres Rail kann derart ausgeführt sein, dass das Kondensat mittig abgeführt wird. Das zweite Rail kann V-förmig verlaufen. Das zweite Rail kann einen Railboden umfassen, der V-förmig verläuft. Durch die V-Form kann das Kondensat mittig abgeführt werden bzw. herauslaufen.

Es gibt Ausführungsformen, bei denen die Temperieranordnung weiterhin eine Positionierungsanordnung umfasst, wobei die Positionierungsanordnung die mehreren Lamellen fixierend zueinander positioniert.

Die Positionierungsanordnung kann mehrere Positionierungselemente umfassen. Die mehreren Positionierungselemente können die mehreren Lamellen fixierend zueinander positionieren. Die Positionierungsanordnung kann beispielsweise drei Positionierungselemente umfassen. Das erste Positionierungselement kann die mehreren länglichen Lamellen entlang der Längsrichtung im Bereich einer mittleren Position zueinander positionieren. Das zweite und dritte Positionierungselement kann die mehreren länglichen Lamellen entlang der Längsrichtung im Bereich der zweiten Stirnseite zueinander positionieren. Dadurch wird ein gleicher Abstand der Lamellen erreicht, der ein gleichmäßiges bzw. gleiches Durchwärmen des Sorbentes gewährleistet.

Die Positionierungselemente können strebenartig ausgebildet sein. An den Positionierungselementen kann ein kammartiger Abschnitt ausgebildet sein. Die Positionierungsanordnung kann formschlüssig mit der Lamellenanordnung verbunden sein. Die Positionierungsanordnung kann die mehreren Lamellen über den Formschluss zueinander fixierend positionieren. Dadurch kann ein Schwenken der Lamellen vermieden werden.

Dadurch kann die Temperieranordnung während einer Montage und während des Betriebs stabilisiert werden. Dadurch bleiben die Abstände der mehreren Lamellen zueinander während der Wärmeausdehnung gleich zueinander. Über die Positionieranordnung können die Lamellen vororientiert werden. Dadurch kann eine Montage der Temperieranordnung erleichtert werden.

Ein zweiter Aspekt der Erfindung betrifft eine Sorbentbehälteranordnung für eine Vorrichtung zur Gewinnung von Kohlendioxid aus gasförmigen Medium umfassend die erfindungsgemäße Temperieranordnung, einen Behälter und eine Sorbentschüttung, wobei die Sorbentschüttung in dem Behälter angeordnet ist und die Temperieranordnung wenigstens teilweise innerhalb der Sorbentschüttung im Behälter angeordnet ist.

Der Behälter kann wannenartig sein. Die Temperieranordnung liegt in dem wannenartigen Behälter. Der Behälter ist mit der Sorbentschüttung befüllt.

Das gasförmige Medium (Umgebungsluft) kann durch Öffnungen im Behälter in eine obere Seitenfläche der liegenden Temperieranordnung eingeleitet werden. Anschließend kann das gasförmige Medium zur Adsorption von Kohlendioxid durch die Sorbentschüttung hindurch geleitet werden. Das gasförmige Medium kann über eine untere Seitenfläche der Temperieranordnung durch Öffnungen im Behälter herausgeleitet werden. Zur Desorption des Kohlendioxids wird die Sorbentschüttung über die Temperieranordnung erwärmt.

Alternativ kann die Sorbentbehälteranordnung mehrere Behälter und mehrere Temperieranordnungen umfassen. Die mehreren Behälter können nebeneinander und/oder übereinander angeordnet sein. Die mehreren Behälter können regalartig zueinander angeordnet sein. Die mehreren Behälter können entsprechend einem vorteilhaften Strömungsverlauf des gasförmigen Mediums zueinander gekoppelt sein.

Ein dritter Aspekt der Erfindung betrifft eine Vorrichtung zur Gewinnung von Kohlendioxid aus einem gasförmigen Medium umfassend die erfindungsgemäße Sorbentbehälteranordnung und/oder die erfindungsgemäße Temperieranordnung.

Die Vorrichtung umfasst die erfindungsgemäße Sorbentbehälteranordnung. Die Vorrichtung umfasst die erfindungsgemäße Temperieranordnung. Die Vorrichtung umfasst die erfindungsgemäße Sorbentbehälteranordnung und die erfindungsgemäße Temperieranordnung. Die Vorrichtung kann ferner eine Vorkonditioniereinheit umfassen. Die Vorrichtung kann weitere Module umfassen, die zur Gewinnung von Kohlendioxid aus dem gasförmigen Medium notwendig sind.

Die Vorrichtung kann eine Direct Air Capture (DAC) Anlage sein.

Ein vierter Aspekt der Erfindung betrifft eine Verwendung der erfindungsgemäßen Temperieranordnung, zur Temperierung einer Sorbentschüttung, zur Gewinnung von Kohlendioxid aus einem gasförmigen Medium.

Die Temperieranordnung wird dazu verwendet, Kohlendioxid aus dem gasförmigen Medium zu extrahieren. Die Temperieranordnung wird dazu verwendet, Kohlendioxid aus der Umgebungsluft zu extrahieren. Auch eine Verwendung für andere Anwendungsfälle ist denkbar.

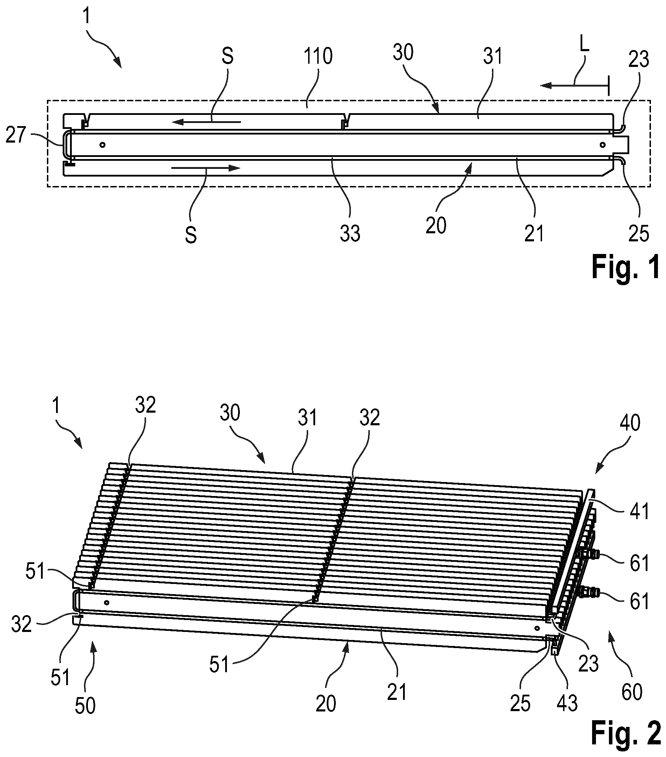

Zurückkommend zu den beigefügten Figuren zeigt Fig. 1 schematisch ein Ausführungsbeispiel einer erfindungsgemäßen Temperieranordnung 1 zur Temperierung einer Sorbentschüttung 110. Die Sorbentschüttung 110 ist schematisch als gestrichelter Rahmen dargestellt. Die Temperieranordnung 1 ist von der Sorbentschüttung 110 umgeben. Die Temperieranordnung umfasst eine Rohranordnung 20 mit einem einstückigen Rohr 21 und eine Lamellenanordnung 30 mit einer länglichen Lamelle 31. Das U-förmige Rohr 21 verläuft entlang einer Längsrichtung L der Lamelle 31. Das Rohr 21 kontaktiert die Lamelle 31 entlang der Längsrichtung L. Das Rohr 21 verläuft zweimal parallel beabstandet übereinander entlang der Länglichrichtung L der Lamelle 31.

Das U-förmige Rohr 21 umfasst an einer ersten Stirnseite (rechte Seite) der Lamelle 31 einen ersten Anschlussabschnitt 23 und einen zweiten Anschlussabschnitt 25. Die beiden Anschlussabschnitte 23, 25 ragen über die erste Stirnseite der Lamelle 31 heraus. Die beiden Anschlussabschnitte 23, 25 sind gebogen und lenken das Rohr 21 und eine Strömungsrichtung S jeweils um 90° um.

Das Rohr 21 umfasst weiterhin einen U-förmigen Umlenkabschnitt 27. Der Umlenkabschnitt 27 ist an einer zweiten Stirnseite (linke Seite) angeordnet. Der Umlenkabschnitt 27 lenkt die Strömungsrichtung S um 180° um.

Exemplarisch ist in Fig. 1 die Strömungsrichtung S eingezeichnet, für den Fall, dass ein Temperiermedium über den ersten Anschlussabschnitt 23 eingeleitet wird. Das Temperiermedium verläuft in einem oberen Abschnitt des Rohrs 21 entlang der Längsrichtung L der Lamelle von einer rechten Seite zu einer linken Seite. Der Umlenkabschnitt 27 lenkt das Temperiermedium um 180° um. Anschließend verläuft das Temperiermedium in einem unteren Abschnitt 21 des Rohrs 21 von der linken Seite zur rechten Seite, hin zum zweiten Anschlussabschnitt 25.

Fig. 2 zeigt eine perspektivische Ansicht der erfindungsgemäßen Temperieranordnung 1. Die Rohranordnung 20 umfasst mehrere Rohre 21 und die Lamellenanordnung 30 umfasst mehrere Lamellen 31. Die mehreren Rohre 21 und die mehreren Lamellen 31 sind jeweils parallel beabstandet zueinander angeordnet. Jeweils ein Rohr 21 und eine Lamelle 31 sind gemäß der Darstellung und Beschreibung zu Fig. 1 angeordnet.

Die mehreren Lamellen 31 der Lamellenanordnung 30 sind über eine Positionierungsanordnung 50 fixierend zueinander positioniert. Die Positionierungsanordnung 50 umfasst mehrere

Positionierungselemente 51. Ein Positionierungselement 51 ist entlang der Längsrichtung L der Lamelle 31 mittig angeordnet. Zwei weitere Positionierungselemente 51 sind im Bereich der zweiten Stirnseite angeordnet. Die Positionierungselemente 51 sind jeweils in einer Fixierungsausnehmung 32 an der Lamelle 31 angeordnet.

An der ersten Stirnseite ist eine Railanordnung 40 angeordnet. Die Railanordnung 40 umfasst ein erstes Rail 41 und ein zweites Rail 43. Beide Rails 41, 43 erstrecken sich über eine Länge der parallel zueinander angeordneten Rohre 21 und Lamellen 31. Die beiden Rails 41, 43 sind parallel übereinander angeordnet. Das erste Rail 41 ist mit dem obenliegenden ersten Anschlussabschnitt 23 verbunden. Das zweite Rail 43 ist mit dem untenliegenden zweiten Anschlussabschnitt 25 verbunden.

Die Railanordnung 40 ist mit einer Anschlusselementanordnung 60 verbunden. Ein Anschlusselement 61 der Anschlusselementanordnung 60 ist mit dem ersten Rail 41 verbunden. Ein weiteres Anschlusselement 61 ist mit dem zweiten Rail 43 verbunden.

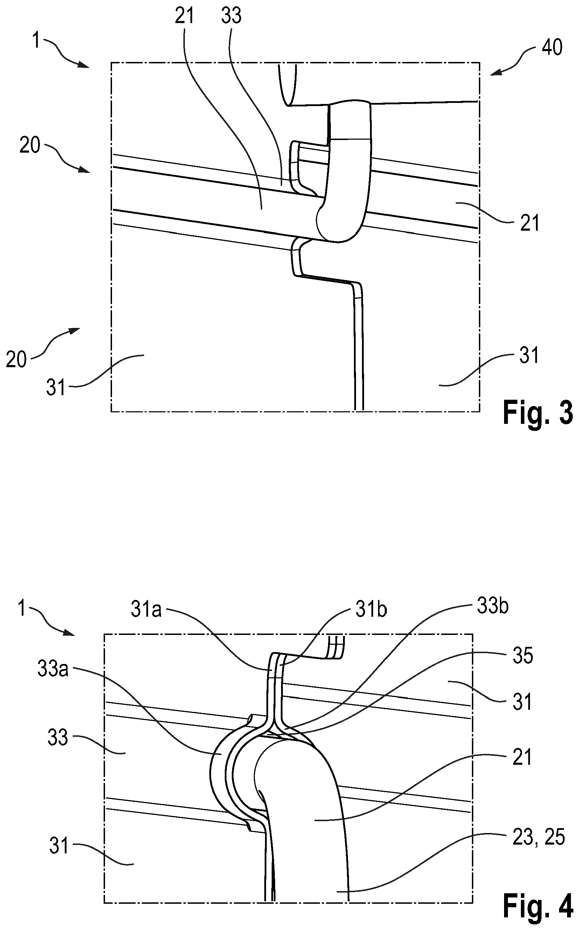

Fig. 3 zeigt eine Detailansicht einer Lamelle 31 mit einer Prägung 33. Die Detailansicht zeigt beispielhaft den Bereich der ersten Stirnseite der Lamelle 31. Die Prägung 33 ist halbkreisförmig ausgebildet. Das Rohr 21 wird von der Prägung 33 halb umgeben bzw. umhüllt. Die Prägung 33 folgt einem Umfang des Rohrs 21. Das Rohr 21 kontaktiert die Lamelle 31 entlang der Längsrichtung L im Bereich der Prägung 33.

Fig. 4 zeigt eine Detailansicht der Lamelle 31 mit zwei Teillamellen 31a und 31b. Die beiden Teillamellen 31a und 31b sind achsensymmetrisch bzw. spiegelsymmetrisch ausgeführt und angeordnet. Beide Teillamellen 31a, 31b haben jeweils eine Teilprägung 33a, 33b. Die beiden Teilprägungen 33a, 33b sind jeweils halbkreisförmig ausgebildet. Die beiden Teilprägungen 33a, 33b bilden eine gemeinsame runde Kanalstruktur 35 innerhalb der Lamelle 31. Die Kanalstruktur 35 erstreckt sich entlang der Längsrichtung L durch die Lamelle 31. Das Rohr 21 ist in der Kanalstruktur 35 angeordnet. Die Kanalstruktur 35 umgibt bzw. umhüllt das Rohr 21 vollständig. Das Rohr 21 kontaktiert die Lamelle 31 entlang der Längsrichtung L innerhalb der Kanalstruktur 35.

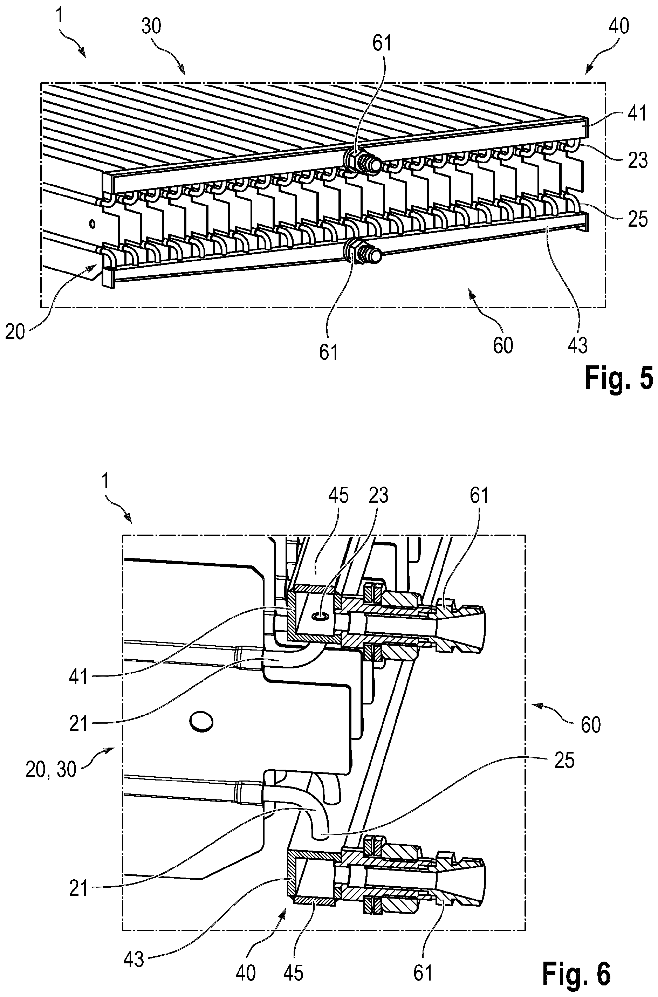

Fig. 5 zeigt eine erste Ausführungsform der Railanordnung 40 an der Temperieranordnung 1. Die Detailansicht in Fig. 5 entspricht im Wesentlichen der ersten Stirnseite der in Fig. 2 gezeigten Temperieranordnung 1.

Die beiden Rails 41, 43 haben jeweils einen viereckigen Querschnitt mit einem Hohlraum. Die beiden Rails 41, 43 der Railanordnung 40 sind mittig zu den mehreren Rohren 21 der Rohranordnung 20 angeordnet. Die mehreren ersten Anschlussabschnitte 23 der mehreren Rohre 21 sind jeweils mit einem Railboden des ersten Rails 41 verbunden. Die mehreren zweiten Anschlussabschnitte 23 der mehreren Rohre 21 sind jeweils mit einer oberen Seite des zweiten Rails 43 verbunden.

Jeweils ein Anschlusselement 61 der Anschlusselementanordnung 60 ist mittig an dem ersten Rail 41 und an dem zweiten Rail 43 positioniert.

Das untenliegende zweite Rail 43 hat einen Railboden, der V-förmig zur Mitte verläuft.

An der ersten Stirnseite ist eine Railanordnung 40 angeordnet. Die Railanordnung 40 umfasst ein erstes Rail 41 und ein zweites Rail 43. Beide Rails 41, 43 erstrecken sich über eine Länge der parallel zueinander angeordneten Rohre 21 und Lamellen 31. Die beiden Rails 41, 43 sind parallel übereinander angeordnet. Das erste Rail 41 ist mit dem obenliegenden ersten Anschlussabschnitt 23 verbunden. Das zweite Rail 43 ist mit dem untenliegenden zweiten Anschlussabschnitt 25 verbunden.

Die Railanordnung 40 ist mit einer Anschlusselementanordnung 60 verbunden. Ein Anschlusselement 61 der Anschlusselementanordnung 60 ist mit dem ersten Rail 41 verbunden. Ein weiteres Anschlusselement 61 ist mit dem zweiten Rail 43 verbunden.

Fig. 6 zeigt eine Detailansicht der in Fig. 5 gezeigten Railanordnung 40 mit der Anschlusselementanordnung 60. Die Anschlusselementanordnung 60 ist exemplarisch.

Die Railanordnung 40 entspricht der ersten Ausführungsform der Railanordnung 40. Das erste und das zweite Rail 41, 43 haben jeweils ein U-Profil und einen Deckel 45. Das U-Profil wird zur Bildung eines Hohlraums mit dem Deckel 45 verschlossen.

Das Rohr 21 ist bündig mit dem Railboden des ersten Rails 41 verbunden. Eine Öffnung jedes Rohrs 21 ist mit dem Hohlraum des ersten Rails 41 und des zweiten Rails 43 verbunden. Die beiden Anschlusselemente 61 der Anschlusselementanordnung 60 sind mit einer Schenkelseite des Rails 41, 43 verbunden. Eine Öffnung der Anschlusselemente 61 ist mit dem Hohlraum des Rails 41, 43 verbunden.

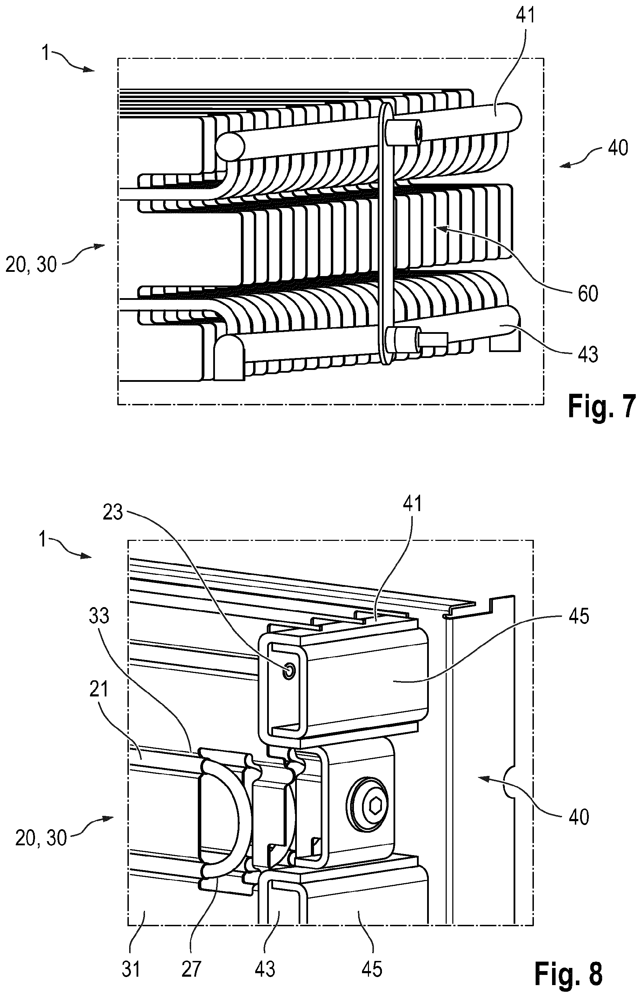

Fig. 7 zeigt eine zweite Ausführungsform der Railanordnung 40. Im Unterschied zur ersten Ausführungsform hat die Railanordnung 40 der zweiten Ausführungsform ein erstes und zweites Rail 41, 43 mit jeweils einem runden Querschnitt. Das erste und das zweite Rail 41, 43 ist jeweils rohrförmig ausgeführt. Das untere zweite Rail 43 verläuft V-förmig. Die prinzipielle Anordnung einer Anbindung der Rohranordnung 20 erfolgt im Wesentlichen identisch zur ersten Ausführungsform.

Fig. 8 zeigt eine dritte Ausführungsform der Railanordnung 40. Im Unterschied zur ersten Ausführungsform hat die Railanordnung 40 der zweiten Ausführungsform ein erstes und zweites Rail 41, 43 mit jeweils einem rechteckigen Querschnitt. Der rechteckige Querschnitt wird über zwei U-förmige Profile gebildet, die mit ihren Schenkeln ineinandergeschoben sind.

Das Rohr 21 ist über eine Klipsverbindung mit der Lamelle 31 verbunden. Weiterhin umfasst das Rohr 21 mehrere Umlenkabschnitte 27. Das Rohr 21 verläuft entlang der Längsrichtung L der Lamelle 31 viermal parallel übereinander.

Die drei Ausführungsformen der Railanordnung 40 sind nicht auf die Verwendung einer bestimmten Ausführung der Lamellenanordnung 30 und Rohranordnung 20 beschränkt. Die drei Ausführungsformen der Railanordnung 40 können beliebig kombiniert werden.

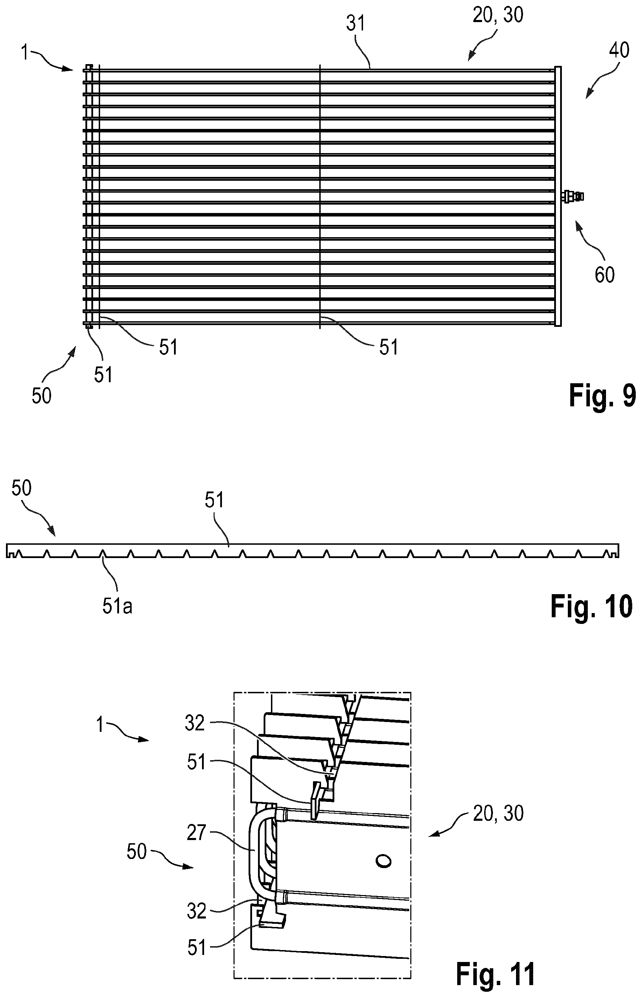

Fig. 9 zeigt eine schematische Draufsicht der erfindungsgemäßen Temperieranordnung 1 mit der Positionierungsanordnung 50. Die Temperieranordnung 1 in Fig. 9 entspricht im Wesentlichen der in Fig. 2 dargestellten Temperieranordnung 1.

Die mehreren parallel zueinander beabstandeten Lamellen 31 berühren sich gegenseitig nicht. Die Lamellen 31 der Lamellenanordnung 30 haben jeweils den gleichen Abstand zueinander. Der Abstand zwischen den Lamellen 31 wird über die Positionierungsanordnung 50 gehalten. Die einzelnen Positionierungsanordnungen 51 verlaufen vertikal zur Längsrichtung L der Lamellen 31. Eine Länge der einzelnen Positionierungsanordnungen 51 entspricht mindestens einer Länge der mehreren nebeneinander angeordneten Lamellen 31.

Über den Abstand zwischen den Lamellen 31 wird ein Volumen gebildet. Ein Volumen zwischen den Lamellen 31 ist für die Sorbentschüttung 110 vorgesehen (nicht dargestellt). Das Volumen zwischen den Lamellen 31 ist dazu ausgebildet, die Sorbentschüttung 110 aufzunehmen.

Fig. 10 zeigt eine schematische Darstellung eines beispielhaften Positionierungselements 51 der Positionierungsanordnung 50. Das kammartige Positionierungselement 51 hat an seiner unteren Seite mehrere Fixiergeometrien 51a. Ein Abstand zwischen den dreieckigen Fixiergeometrien 51a entspricht im Wesentlichen dem Abstand zwischen den mehreren Lamellen 31.

Fig. 11 zeigt eine Detailansicht der erfindungsgemäßem Temperieranordnung 1 mit dem U-förmigen Umlenkabschnitt 27. Die Detailansicht in Fig. 11 entspricht im Wesentlichen der zweiten Stirnseite der in Fig. 2 gezeigten Temperieranordnung 1. Der Umlenkabschnitt 27 ragt aus der oberen und der unteren Kanalstruktur 35 heraus. Der Umlenkabschnitt 27 ist in einer Ausnehmung der Lamelle 31 angeordnet. Durch die Anordnung des Umlenkabschnitts 27 in der Ausnehmung schließt der Umlenkabschnitt 27 im Wesentlichen bündig mit der Stirnseite der Lamelle 31 ab.

Ein Positionierungselement 51 ist unterhalb des Umlenkabschnitts 27 horizontal in einer Fixierungsausnehmung 32 in der Lamellenanordnung 30 angeordnet. Ein weiteres Positionierungselement 51 ist im Bereich eines oberen Endabschnitts vertikal in einer Fixierungsausnehmung 32 in der in der Lamellenanordnung 30 angeordnet. Das Positionierungselement 51 fixiert die mehreren Lamellen über die dreieckige Fixiergeometrie 51a zueinander. Jede Fixiergeometrie 51a greift zur Fixierung jeweils in eine Lamelle 31 ein.

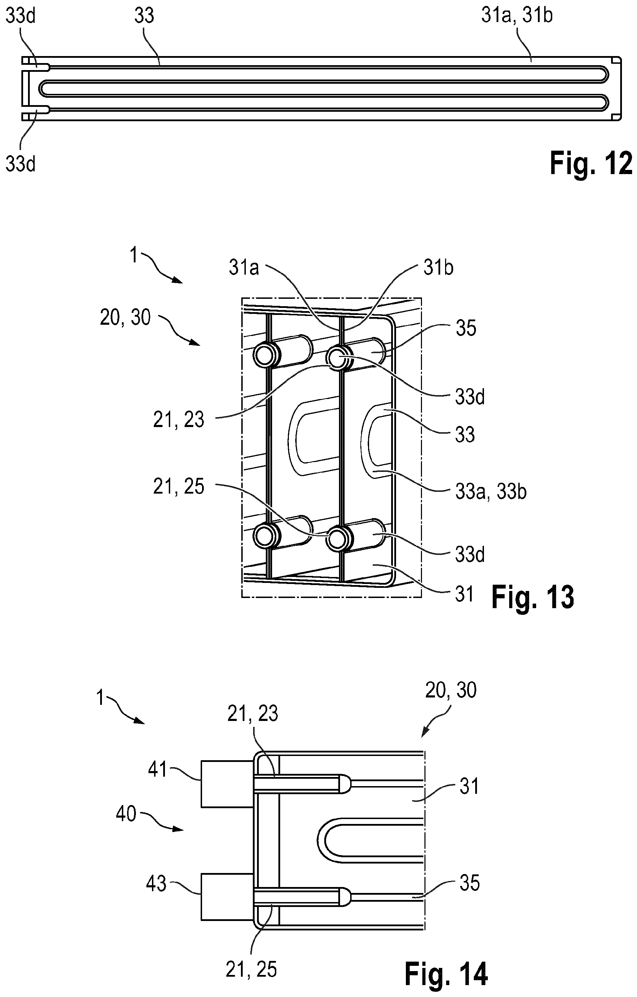

Fig. 12 zeigt eine zweite Ausführungsform der Lamelle 31. Fig. 12 zeigt exemplarisch eine Teillamelle 31a, 31b. Bei der zweiten Ausführungsform der Lamelle 31 wird die Kanalstruktur 35 ebenfalls durch die Teilprägungen 33a, 33b ausgebildet. Die Kanalstruktur 35 wird bei der zweiten Ausführungsform derart ausgebildet, dass das Temperiermedium direkt durch die Kanalstruktur 35 geleitet werden kann. An einer Stirnseite (linke Seite) sind zwei Anschlussprägungen 33d ausgebildet. Die beiden Anschlussprägungen 33d sind mit der Teilprägung 33a, 33b verbunden.

In Fig. 12 ist die Prägung 33 mäanderförmig ausgebildet. Die Prägung 33 hat drei Umlenkabschnitte.

Fig. 13 zeigt eine perspektivische Detailansicht der erfindungsgemäßen Temperieranordnung 1 mit der zweiten Ausführungsform der Lamelle 31. Die Lamelle 31 umfasst zwei Teillamellen 31a, 31b. Die gegenüberliegenden Teilprägungen 31a, 31b bilden die mediendichte Kanalstruktur 35 aus. Die gegenüberliegenden Anschlussprägungen 35 bilden einen Anschluss aus. Das hülsenartige Rohr 21 ist in dem Anschluss der Anschlussprägungen 35 angeordnet und bildet oben den ersten Anschlussabschnitt 23 und unten den zweiten Anschlussabschnitt 25. Das Rohr 21 verläuft entlang der Längsrichtung L der Lamelle 31 und kontaktiert die Lamelle 31 entlang der Längsrichtung L.

Fig. 14 zeigt eine Schnittansicht der erfindungsgemäßen Temperieranordnung 1 mit der zweiten Ausführungsform der Lamelle 31. Eine Stirnseite des Rohrs 21 ist mit einer Railanordnung 40 verbunden. Ein oberes Rohr 21 ist mit dem ersten Rail 41 verbunden. Ein unteres Rohr 21 ist mit dem zweiten Rail 43 verbunden.

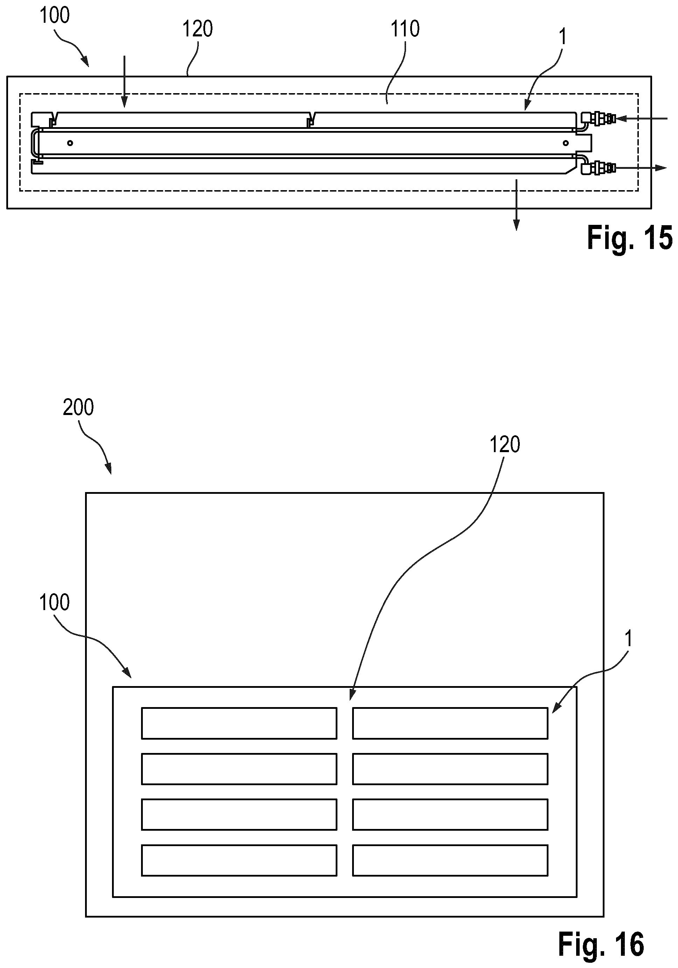

Fig. 15 zeigt eine schematische Seitenansicht einer erfindungsgemäßen Sorbentbehälteranordnung 100. Die Sorbentbehälteranordnung 100 umfasst einen Behälter 120, die Sorbentschüttung 110 und die Temperieranordnung 1. Die Temperieranordnung 1 ist liegend in dem Behälter 120 angeordnet. Der Behälter 120 ist mit der Sorbentschüttung 110 befüllt (gestrichelte Umrahmung).

Exemplarisch ist in Fig. 15 ein Luftfluss (gasförmiges Medium) und die Strömungsrichtung des Temperiermediums mit Pfeilen eingezeichnet. Ein Luftzufluss erfolgt über einen Zugang im Behälter in eine obere Seitenfläche der liegenden Temperieranordnung 1. Anschließend wird das gasförmige Medium zur Adsorption des Kohlendioxids durch die Sorbentschüttung 110 hindurch geleitet werden. Das gasförmige Medium wird über einen Ausgang im Behälter 120 an der unteren Seitenfläche der Temperieranordnung 1 herausgeleitet. Zur Desorption des Kohlendioxids wird die Sorbentschüttung 110 über die Temperieranordnung 1 erwärmt. Das Temperiermedium wird über das erste Rail 41 eingeleitet und über das zweite Rail 43 herausgeleitet.

Fig. 16 zeigt eine schematische Darstellung einer erfindungsgemäßen Vorrichtung 200. Die Vorrichtung 200 umfasst die Sorbentbehälteranordnung 100 und die Temperieranordnung 1. Die Sorbentbehälteranordnung 100 in Fig. 16 umfasst mehrere Behälter 120 mit jeweils einer Temperieranordnung 1. Die mehreren Behälter 120 sind nebeneinander und übereinander gestapelt angeordnet.

Die erfindungsgemäße Temperieranordnung ist nicht auf den Einsatz in einer Vorrichtung zur Gewinnung von Kohlendioxid aus einem gasförmigen Medium begrenzt. Die erfindungsgemäße Temperieranordnung kann für beliebige Anwendungen zur Temperierung von einer Schüttung oder anderen Materialien verwendet werden.

### Bezugszeichenliste

- 1: Temperieranordnung
- 20: Rohranordnung
- 21: Rohr
- 23: Erster Anschlussabschnitt
- 25: Zweiter Anschlussabschnitt
- 27: Umlenkabschnitt
- 30: Lamellenanordnung
- 31: Längliche Lamelle
- 31a: Teillamelle
- 31b: Teillamelle
- 32: Fixierungsausnehmung
- 33: Prägung
- 33a: Teilprägung
- 33b: Teilprägung
- 33d: Anschlussprägung
- 35: Kanalstruktur
- 40: Railanordnung
- 41: Erstes Rail
- 43: Zweites Rail
- 45: Deckel
- 50: Positionierungsanordnung
- 51: Positionierungselement
- 51a: Fixiergeometrie
- 60: Anschlusselementanordnung
- 61: Anschlusselement
- 100: Sorbentbehälteranordnung
- 110: Sorbentschüttung
- 120: Behälter
- 200: Vorrichtung
- L: Längsrichtung
- S: Strömungsrichtung

## Patentansprüche

1. Temperieranordnung (1), zur Temperierung einer Sorbentschüttung (110), zur Gewinnung von Kohlendioxid aus einem gasförmigen Medium umfassend:
- eine Rohranordnung (20) mit einem Rohr (21), und
- eine Lamellenanordnung (30) in der Sorbentschüttung (110) mit einer länglichen Lamelle (31), wobei das Rohr (21) entlang einer Längsrichtung (L) der Lamelle (31) verläuft und die Lamelle (31) entlang der Längsrichtung (L) kontaktiert.

2. Temperieranordnung (1) nach Anspruch 1, wobei eine Strömungsrichtung (S) innerhalb des Rohrs (21) entlang der Längsrichtung (L) der Lamelle (31) verläuft.

3. Temperieranordnung (1) nach Anspruch 1 oder 2, wobei an der Lamelle (31) eine Prägung (33) entlang der Längsrichtung (L) der Lamelle (31) ausgebildet ist.

4. Temperieranordnung (1) nach Anspruch 3, wobei das Rohr (21) von der Prägung (33) umgebend in der Prägung (33) angeordnet ist.

5. Temperieranordnung (1) nach einem der vorhergehenden Ansprüche, wobei die Lamelle zwei Teillamellen (31a, 31b) mit jeweils einer Teilprägung (33a, 33b) umfasst, wobei die beiden Teilprägungen (33a, 33b) eine Kanalstruktur (35) innerhalb der Lamelle (31) ausbilden.

6. Temperieranordnung (1) nach Anspruch 5, wobei das Rohr (21) in der Kanalstruktur (35) angeordnet ist.

7. Temperieranordnung (1) nach Anspruch 5 oder 6, wobei die beiden Teillamellen (31a, 31b) formschlüssig miteinander verbunden sind.

8. Temperieranordnung (1) nach einem der vorhergehenden Ansprüche, wobei das Rohr (21) einen ersten Anschlussabschnitt (23) und einen zweiten Anschlussabschnitt (25) umfasst, die beide an einer ersten Stirnseite der Lamelle (31) angeordnet sind.

9. Temperieranordnung (1) nach einem der vorhergehenden Ansprüche, wobei das Rohr (21) einen Umlenkabschnitt (27) umfasst, der an einer zweiten Stirnseite der Lamelle (31) angeordnet ist.

10. Temperieranordnung (1) nach Anspruch 9, ferner umfassend eine Railanordnung (40) mit zwei Rails (41, 43), wobei das erste Rail (41) mit dem ersten Anschlussabschnitt (23) verbunden ist und das zweite Rail (43) mit dem zweiten Anschlussabschnitt (25) verbunden ist.

11. Temperieranordnung (1) nach einem der vorhergehenden Ansprüche, wobei die Rohranordnung (20) mehrere Rohre (21) umfasst und die Lamellenanordnung (30) mehrere Lamellen (31) umfasst, die jeweils parallel beabstandet zueinander angeordnet sind.

12. Temperieranordnung (1) nach Anspruch 11, ferner umfassend eine Positionierungsanordnung (50), wobei die Positionierungsanordnung (50) die mehreren Lamellen (31) fixierend zueinander positioniert.

13. Sorbentbehälteranordnung (100) für eine Vorrichtung (200) zur Gewinnung von Kohlendioxid aus gasförmigen Medium umfassend eine Temperieranordnung (1) nach einem der Ansprüche 1 bis 12, einen Behälter (120) und eine Sorbentschüttung (110), wobei die Sorbentschüttung (110) in dem Behälter (120) angeordnet ist und die Temperieranordnung (1) wenigstens teilweise innerhalb der Sorbentschüttung (110) im Behälter (120) angeordnet ist.

14. Vorrichtung (200) zur Gewinnung von Kohlendioxid aus einem gasförmigen Medium umfassend eine Sorbentbehälteranordnung (100) nach Anspruch 13 und/oder eine Temperieranordnung (1) nach einem der Ansprüche 1 bis 12.

15. Verwendung einer Temperieranordnung (1) nach einem der Ansprüche 1 bis 12, zur Temperierung einer Sorbentschüttung (110), zur Gewinnung von Kohlendioxid aus einem gasförmigen Medium.
